(19) **Europäisches Patentamt**

**European Patent Office**

**Office européen des brevets**

(11) **EP 4 704 356 A1**

(12) **EUROPEAN PATENT APPLICATION**

(43) Date of publication:
04.03.2026 Bulletin 2026/10

(21) Application number: 24196703.3

(22) Date of filing: 27.08.2024

(51) International Patent Classification (IPC):
*H04B 10/70* (2013.01)

(52) Cooperative Patent Classification (CPC):
H04B 10/70

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Deutsche Telekom AG**
**53113 Bonn (DE)**

(72) Inventors:
• **Ribeiro Sena, Matheus**
**14129 Berlin (DE)**

• **Geitz, Marc**
**58089 Hagen (DE)**
• **Braun, Ralf-Peter**
**12305 Berlin (DE)**

(74) Representative: **2SPL Patentanwälte PartG mbB**
**Landaubogen 3**
**81373 München (DE)**

Remarks:
Amended claims in accordance with Rule 137(2)
EPC.

(54) **MEASURING APPARATUS, MEASURING SYSTEM AND METHOD FOR DETERMINING A DEGREE OF QUANTUM ENTANGLEMENT**

(57) Various examples of the present disclosure relate to a measuring apparatus and a method for determining a degree of quantum entanglement, to a quantum node comprising such a measuring apparatus, and to a measuring system comprising two such measuring apparatuses. A measuring apparatus (410a, 410b) for determining a degree of quantum entanglement of photons of a photon signal comprises at least one fiber-based polarization retarder (412a, 412b, 412c, 412d) configured to adjust a polarization state of a photon signal being transmitted through a fiber using stress-induced birefringence.

Fig. 4

## Description

### Technical Field

Various examples of the present disclosure relate to a measuring apparatus and a method for determining a degree of quantum entanglement, to a quantum node comprising such a measuring apparatus, and to a measuring system comprising two such measuring apparatuses.

### Background

Proving and detecting entanglement in fiber-based quantum networks is a fundamental task for the deployment of the quantum internet. The CHSH (Clauser-Horne-Shimony-Holt) test is a widely used method to verify the presence of entanglement. This test involves the use of polarizers responsible for filtering the polarization states of entangled photons in different spatial modes. Traditionally, these polarizers are installed in two separate spatial modes containing each photon of the entangled photon pair. Then, the test is carried out by rotating the polarization axis of these devices to filter the polarization state of the entangled photons and measure the statistics of the coincident counts. However, the traditional way of implementing this method faces challenges. First, when carried out in fiber-based transmission systems, the entangled photons usually have to be decoupled from the optical fiber into free space, where their polarization states are filtered by a polarizer, and then recoupled back into the fiber. This process can lead to significant optical losses and requires meticulous alignment procedures. Second, polarizers are typically constructed from high-quality crystals, which increase the cost, and their mechanical rotation relies on precise motorized components, adding to the complexity and expense of the setup. Most polarizers are also sensitive to stress when mounting, thus, overtightening these devices can cause stress-induced birefringence in both the glass and the assembly and may also reduce the extinction ratio of the optics. At last, when propagated over optical fiber, the entangled photons have their polarization states modified, requiring calibration procedures before they are filtered by a polarizer. This calibration typically requires mountable waveplates, which are responsible for controlling the polarization of the entangled photons and have to be added to the setup, leading to more complex opto-mechanical designs.

### Summary

There may be a desire for providing an improved approach for detecting quantum entanglement, and in particular for measuring a degree of quantum entanglement.

This desire is addressed by the subject-matter of the independent claims.

Various examples of the present disclosure are based on the finding, that the process of adjusting the polarization state, for the purposes of calibrating the measuring apparatus with respect to a measuring system and for the purpose of rotating the polarization axis during the entanglement measuring protocols, such as the aforementioned CHSH test, can be facilitated by using special retarders that depend on the use of stress-induced birefringence of optical fibers. This technique relies on winding an optical fiber cable around a circular disk, which induces a differential delay between the orthogonal polarization components, effectively rotating the polarization state of the incoming light, which can be then later filtered by a fixed in-line optical filter. This way, fiber-to-free-space conversions can be reduced or eliminated, thereby reducing optical losses and simplifying alignment. Additionally, optical fiber stress birefringence can be controlled mechanically and can be integrated using simple electronic components, making the system more robust, cost-effective, and compatible for deployment in entanglement distribution networks. The deployment of cost-effective and compact entanglement detection modules plays a key role in securing stable operation of quantum systems in a networkwide context. These modules can, for example, be used to verify that quantum memories, which are expected to have short storage times, have successfully fulfilled their task of preserving entangled particles in spatially dispersed nodes. Therefore, these modules, in large-scale quantum networks, may enable the possibility of synchronizing independent and probabilistic quantum channels, which improves scalability of these systems.

Some aspects of the present disclosure relate to measuring apparatus for determining a degree of quantum entanglement of photons of a photon signal. The measuring apparatus comprises at least one fiber-based polarization retarder configured to adjust a polarization state of a photon signal being transmitted through a fiber using stress-induced birefringence. This way, optical losses can be reduced, alignment can be simplified, while enabling a robust and cost-effective implementation.

In general, polarization retarders may be used for two purposes - for calibrating the incoming photon signal (to compensate for the impact of the fiber channel), and for adjusting the polarization state for measuring the degree of quantum entanglement. Accordingly, the measuring apparatus may comprise one or more first fiber-based polarization retarders for adjusting the polarization state of the photon signal to calibrate the photons to a desired bell state. The measuring apparatus may (further) comprise a second fiber-based polarization retarder for adjusting the polarization state of the photon signal from the desired bell state according to an angle defined by a measuring procedure for determining the degree of quantum entanglement of the photons.

The fiber can introduce an arbitrary amount of polarization shift onto the photons of the photon signal. Therefore, multiple fiber-based polarization retarders, with different maximal phase shifting capabilities, may be combined to calibrate the photons to the desired bell state. For example, the one or more first fiber-based polarization retarders may comprise at least one fiber-based polarization retarder for affecting a half wavelength phase shift and at least one, preferably two, fiber-based polarization retarder for affecting a quarter wavelength phase shift.

For example, the second fiber-based polarization retarder may correspond to a single fiber-based polarization retarder for affecting a half wavelength phase shift. A half wavelength phase shift may be sufficient for common measuring protocols for determining the degree of entanglement of photons.

The purpose of the one or more first fiber-based polarization retarders is to compensate for the effects of the fiber, to make sure that the different measuring apparatuses rely on a known Bell state. In particular, the original Bell state, i.e., the Bell state before transmission via the respective fiber, may be used as a starting point. Therefore, the one or more first fiber-based polarization retarders may be configured to reconstruct an original Bell state of the photon signal that is possibly disturbed during the fiber transmission.

To determine the degree of quantum entanglement, the polarization of the photons are rotated by a preset amount, followed by filtering by a polarization filter. Subsequently, a detector is used to detect the photons that have passed the polarization filter. Accordingly, the measuring apparatus may comprise a polarization filter for filtering the photon signal transmitted through the fiber. The measuring apparatus may further comprise a detector for detecting photons of the photon signal after the photon polarization state of the photon signal is adjusted by the at least one fiber-based polarization retarder and the photon signal is filtered by the polarization filter. The measuring apparatus may further comprise a controller configured to control the at least one fiber-based polarization retarder to adjust the polarization state of the photon signal according to a measuring procedure comprising a plurality of stages, with the polarization state of the photon signals being adjusted by at least two different angles over a course of the measuring procedure. The controller may be further configured to determine information related to a photon count measured by the detector during the respective stages of the measuring procedure. This information related to the photon count may be used, in combination with corresponding information related to the photon count determined by a controller of a different measuring apparatus, to determine the degree of entanglement.

In general, the degree of quantum entanglement is determined by observing correlation between entangled properties of photon pairs. Thus, the observation is performed by a pair of measuring apparatuses. Accordingly, the measuring procedure may be a measuring procedure for two or more measuring apparatuses. The measuring procedure may define a plurality of combinations of polarization adjustments to be performed by the two or more apparatuses during the plurality of stages. For example, a separate combination of polarization adjustments may be performed at each stage of the plurality of stages. In particular, the measuring procedure may define at least (e.g., exactly) sixteen combinations of polarization adjustments to be performed during at least sixteen stages. This way, the correlations may be determined for the different combinations of polarization adjustments.

One advantage of using stress-induced birefringence is that simple components, such as motors, can be used to adjust the angle of rotation affected by the respective polarization retarder. For example, the measuring apparatus may comprise at least one motor for tilting the at least one fiber-based polarization retarder. For example, the controller may be configured to control the at least one motor to control the at least one fiber-based polarization retarder to adjust the polarization state of the photon signal.

As outlined above, the polarization retarders may serve the tasks of a) calibrating the photons to a desired bell state, and b) adjusting the polarization state according to a measuring procedure. Accordingly, the measuring apparatus may comprise one or more first fiber-based polarization retarders for adjusting the polarization state of the photon signal to calibrate the photons to a desired bell state, such as an original bell state of the respective photons. For example, the controller may be configured to perform a calibration procedure to determine one or more calibration parameters suitable for controlling the one or more first fiber-based polarization retarders such, that the one or more first fiber-based polarization retarders adjust the polarization state of the photon signal to the desired bell state. This calibration procedure may be performed prior to the actual measurement procedure, and may ensure that the desired bell state, such as the original bell state, is achieved. Additionally, the measuring apparatus may comprise a second fiber-based polarization retarder for adjusting the polarization state of the photon signal from the desired bell state according to an angle defined by the measuring procedure.

To perform the calibration, the polarization filter and the detector are used to determine how the polarization state of the incoming photon signal is to be adjusted, e.g., by determining at which tilting angle the photons are (mostly) filtered by the polarization filter. For example, the calibration procedure may comprise varying a tilting angle of the one or more first fiber-based polarization retarders according to a gradient descent algorithm to determine a tilting angle or combination of tilting angles that adjust a polarization state of the photon signal such, that the resulting linear polarization is substantially orthogonal to a polarization of the polarization filter, as evidenced by a reduction of photons arriving at the detector. The gradient algorithm ensures that the tilting angle is varied in the "right" direction, thus speeding up the calibration procedure compared to a naive approach.

The gradient algorithm may be performed locally by the measuring device. For example, the controller may be configured to determine information related to a calibration photon count measured by the detector during the calibration procedure, and to perform the gradient descent algorithm based on the information related to the calibration photon count measured by the detector. This way, calibration can be performed without requiring coordination by a different device, which can speed up the calibration. Alternatively, the controller may be configured to provide the information related to the calibration photon count to a remote evaluation device for performing the gradient descent algorithm. This way, the implementation of the controller may be less complex.

In some examples, the measuring apparatus may be the entity that is used to determine the degree of quantum entanglement based on the photon count measured locally by the measuring apparatus and based on a photon count measured by another measuring apparatus. In this case, the controller may be configured to obtain second information related to a photon count measured by a second detector of a second measuring apparatus from the second measuring apparatus, and to determine the degree of quantum entanglement of the photons of the photon signal based on the information related to the photon count measured by the detector and based on the second information related to the photon count measured by the second detector. This way, the computational capabilities of the measuring apparatus may be leveraged to determine the degree of entanglement. As a result, the result of the determination is instantly available at a quantum host comprising the measuring apparatus.

Alternatively, or additionally, the controller may be configured to provide the information related to the photon count measured by the detector to a second measuring apparatus or to a remote evaluation device. This way, the degree of quantum entanglement can be determined at the respective other device, e.g., so the implementation of the controller is less complex, or so that the result can be determined by the respective other device as well (in case both measuring devices are included in hosts that rely on the result of the determination).

Another aspect of the present disclosure relates to a quantum node comprising the above measuring apparatus and a quantum memory. For example, a controller of the quantum node may be configured to determine a time delay of a photon signal comprising entangled photons arriving at the quantum node relative to one or more corresponding photon signals arriving at one or more other quantum nodes using the measuring apparatus, and to control the quantum memory based on the time delay. This way, the quantum memory control can be controlled to introduce a delay when forwarding photons based on the time delay determined using the measuring apparatus.

Another aspect of the present disclosure relates to a measuring system comprising a first measuring apparatus as described above for measuring a first photon signal and a second measuring apparatus as described above for measuring a second photon signal. For example, a controller of the measuring system, e.g., the controller of one of the measuring apparatuses, or a controller that is separate from either measuring apparatus, may be configured to determine a degree of entanglement of photons of the first and second photon signal using the first and second measuring apparatus. For example, the measuring devices may be used, with the controller, to perform the CHSH test.

As outlined with respect to the individual measuring apparatuses, each measuring apparatus may comprise a controller configured to control the respective at least one fiber-based polarization retarder to adjust the polarization state of the respective photon signal according to a measuring procedure comprising a plurality of stages. For example, the measuring procedure may define a plurality of combinations of polarization adjustments to be performed by the first and second measuring apparatus during the plurality of stages, with a separate combination of polarization adjustments being performed at each stage of the plurality of stages. The controller of the measuring system may be configured to determine the degree of entanglement of photons of the first and second photon signal based on first and second information related to a photon count measured by a respective detector of the first and second measuring apparatus during the respective stages of the measuring procedure.

Some aspects of the present disclosure relate to a corresponding method for determining a degree of quantum entanglement of photons of a photon signal. The method comprises providing, by an entangled photon source, a first and a second photon signal comprising entangled photons to a first and second measuring apparatus. The method comprises adjusting, by at least one fiber-based polarization retarder of the respective measuring apparatus, a polarization state of the first and second photon signal according to a measuring procedure comprising a plurality of stages. The measuring procedure defines a plurality of combinations of polarization adjustments to be performed by the first and second measuring apparatus during the plurality of stages, and the polarization state is adjusted by the respective at least one fiber-based polarization retarder using stress-induced birefringence. The method comprises filtering, by a polarization filter of the respective measuring apparatus, the respective photon signal. The method comprises detecting, by a detector of the respective measuring apparatus, photons of the respective photon signal after the polarization state of the photon signal is adjusted by the respective at least one fiber-based polarization retarder and the photon signal is filtered by the respective polarization filter. The method comprises determining first and second information related to a photon count measured by the respective detector during the respective stages of the measuring procedure. The method comprises determining a degree of entanglement of the photons of the first and second photon signal based on a correlation or coincidence of detected photons indicated by the first and second information related to the photon count measured by the detectors of the first and second measurement device. As is evident, the method is based on the features and functions described in connection with the measuring apparatus and measuring system described above. Features introduced in connection with the above measuring apparatus and measuring system may likewise be introduced into the corresponding method.

For example, the method may comprise adjusting, by respective one or more first fiber-based polarization retarders of the respective measuring apparatus, the polarization state of the respective photon signal to calibrate the photons to a desired bell state, and adjusting, by a respective second fiber-based polarization retarder, the polarization state of the photon signal from the desired bell state according to an angle defined by the measuring procedure. This way, the respective incoming photon signal are calibrated to compensate for the impact of the fiber channel.

**Brief Description of the Figures**

There are several ways how to design and further develop the teaching of the present disclosure an advantageous way. To this end, it is to be referred to the patent claims subordinate to patent claim 1 on the one hand and to the following explanation of examples of the proposed concept, illustrated by the Figures on the other hand. In the Figures,

Fig. 1 shows an example setup for realization of a CHSH test;

Fig. 2 shows an example of a linear polarizer for filtering a linearly polarized light beam;

Fig. 3 shows an example setup comprising a rotatable waveplate and a fixed polarizer;

Fig. 4 shows a schematic diagram of an example of two measuring apparatuses and of a measuring system comprising the two measuring apparatuses;

Fig. 5 illustrates how each polarization retarder can be independently rotated by an angle $\varepsilon$, thus twisting the fiber;

Fig. 6 shows an electro-mechanic schematic diagram of components for controlling the retarders of a measuring apparatus;

Fig. 7 illustrates how the polarization state of photons of a photon signal is adjusted to reconstruct an original bell state and subsequently filtered by a linear polarizer;

Fig. 8 shows an example time histogram for coincident counts between two measuring apparatuses;

Fig. 9 shows a flow chart of an example of a calibration process for tuning an angular positioning of polarization retarders;

Fig. 10 shows example curves used to map the rotation angles of the polarization retarders to polarization angles;

Fig. 11 shows a flow chart of an example of a method for determining a degree of quantum entanglement of photons of a photon signal;

Fig. 12 shows a schematic diagram of a plurality of quantum nodes using measuring apparatuses to synchronize quantum memories; and

Fig. 13 shows a flow chart of an example mechanism for synchronizing two quantum memories.

**Detailed Description of the Figures**

Various examples of the present disclosure relate to a system and method for automating and integrating entanglement detection modules based on polarization control via birefringence stress into entanglement-distribution networks.

The EPR paradox, proposed in 1935 by Albert Einstein, Boris Podolsky, and Nathan Rosen (Albert Einstein, Boris Podolsky, and Nathan Rosen. Can quantum-mechanical description of physical reality be considered complete? Physical review, 47(10):777-780, 1935), suggests that the Copenhagen interpretation of quantum mechanics leads to a paradox by implying faster-than-light communication, which is inconsistent with the theory of relativity. The paradox arises from the entanglement of two particles, whereby the measurement of one particle affects the state of the other particle, regardless of the distance between them.

Einstein proposed a solution to the paradox in which he suggests that a realistic and complete formulation of quantum mechanics should include hidden variables. These variables, in turn, determine quantum states completely. However, Bell's inequality, developed in 1964, showed that the predictions of quantum mechanics could not be explained by any theory that satisfies both locality (the idea that events are only influenced by their immediate surroundings) and realism (the idea that physical properties exist independently of observation), see John Stewart Bell and John Stewart Bell. Speakable and unspeakable in quantum mechanics: Collected papers on quantum philosophy. Cambridge university press, 2004.

Bell's inequality has been experimentally tested using entangled particles, and the results have consistently shown violations of the inequality, supporting the non-local principles of quantum mechanics over local realism, as shown in the following publications:

Mary A Rowe, David Kielpinski, Volker Meyer, Charles A Sackett, Wayne M Itano, Christopher Monroe, and David J Wineland. Experimental violation of a bell's inequality with efficient detection. Nature, 409(6822):791-794, 2001 Paul G Kwiat, Klaus Mattle, Harald Weinfurter, Anton Zeilinger, Alexander V Sergienko, and Yanhua Shih. New high-intensity source of polarization-entangled photon pairs. Physical Review Letters, 75(24):4337, 1995.
JG Rarity and PR Tapster. Experimental violation of bell's inequality based on phase and momentum. Physical Review Letters, 64(21):2495, 1990.
John F Clauser, Michael A Horne, Abner Shimony, and Richard A Holt. Proposed experiment to test local hidden-variable theories. Physical review letters, 23(15):880, 1969.

One such experiment involves using pairs of polarization-entangled photons, the famous CHSH experiment (John F Clauser, Michael A Horne, Abner Shimony, and Richard A Holt. Proposed experiment to test local hidden-variable theories. Physical review letters, 23(15):880, 1969).

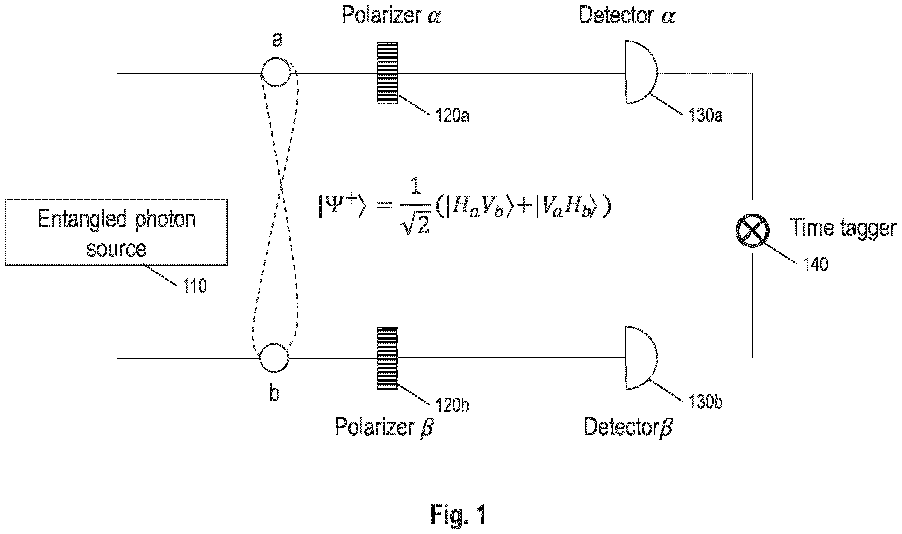

The CHSH test uses the setup shown in Fig. 1. Fig. shows an example setup for realization of the CHSH test. In Fig. 1, *H* denotes horizontal, and *V* denotes *Vertical*. As can be observed, an entangled photon source 410 generates a Bell state pair (BSP), illustrated in Fig. 1 as $|\Psi^+\rangle$. Each photon of the BSP, denoted as photon *a* and photon *b*, is located in a different spatial mode. These photons are then directed to Polarizer $\alpha$ 120a and Polarizer $\beta$ 120b, respectively. The polarizers filter the incoming photons based on their polarization states, and the filtered photons are finally measured by detectors 130a, 130b. Correlation measurements of this detection are then performed by a time tagger 140.

The Bell's inequality is defined by the Bell parameter "S", which under the assumption of locality ISI < 2. The Bell parameter can be estimated as (see John Stewart Bell and John Stewart Bell. Speakable and unspeakable in quantum mechanics: Collected papers on quantum philosophy. Cambridge university press, 2004):

$$S = E(\alpha, \beta) + E(\alpha', \beta) - E(\alpha, \beta') + E(\alpha', \beta') \qquad (1)$$

where the term $E(\alpha, \beta)$ is a measurement of the quantum correlation between the received photon-pairs in arms *a* and *b*. Consequently, each term $E(\alpha, \beta)$ can be described as:

$$E(\alpha, \beta) = \frac{C(\alpha, \beta) - C(\alpha, \beta_\perp) - C(\alpha_\perp, \beta) + C(\alpha_\perp, \beta_\perp)}{C(\alpha, \beta) + C(\alpha, \beta_\perp) + C(\alpha_\perp, \beta) + C(\alpha_\perp, \beta_\perp)} \qquad (2)$$

where $C(\alpha, \beta)$ is the number of coincidences measured by the time-tagger for the nominal angles $\alpha$ and $\beta$. Additionally, $\alpha_\perp = \alpha + 90°$ and $\beta_\perp = \beta + 90°$.

It is known that a maximal violation of the Bell's inequality yields $|S_{Max}| = 2\sqrt{2}$ (maximally entangled photons) (John F Clauser, Michael A Horne, Abner Shimony, and Richard A Holt. Proposed experiment to test local hidden-variable theories. Physical review letters, 23(15):880, 1969). This is achieved when $\alpha = 0°$, $\alpha' = 45°$, $\beta = 22.5°$, $\beta' = 67.5°$. By inspecting Equation 2, it is possible to see that the angles $\alpha_\perp = 90°$, $\alpha'_\perp = 135°$, $\beta_\perp = 112.5°$, $\beta'_\perp = 157.5°$ may be also considered for this estimation. In total, to compute the Bell parameter of Equation 1, sixteen angle configurations may be set to the polarizers $\alpha$ and $\beta$, they are:

| | |
|---|---|
| • $\alpha = 0°, \beta = 22.5°$; | • $\alpha = 45°, \beta = 22.5°$; |
| • $\alpha = 0°, \beta' = 67.5°$; | • $\alpha = 45°, \beta' = 67.5°$; |
| • $\alpha = 0', \beta_\perp = 112.5°$; | • $\alpha = 45°, \beta_\perp = 112.5°$; |

(continued)

| • α = 0°,β'⊥ = 157.5° ; | • α = 45°,β'⊥ = 157.5° ; |
|---|---|
| • α = 90°,β = 22.5°;<br>• α = 90°,β' = 67.5°;<br>• α = 90°,β⊥ = 112.5°;<br>• α = 90°,β'⊥ = 157.5° ; | • α = 135,β = 22.5°;<br>• α = 135,β' = 67.5°;<br>• α = 135,β⊥ = 112.5°;<br>• α = 135,β'⊥ = 157.5° . |

In practical systems, it is quite complex to achieve an estimation of $|S_{Max}| = 2\sqrt{2}$ due to system imperfections (device limitations, losses, imperfect sources/detectors), however, any value ISI ≥ 2 already indicates non-localism in the system.

For the purpose of polarization filtering, the present disclosure provides means of accurately and efficiently filtering the polarization state of incoming entangled photons *a* and *b*.

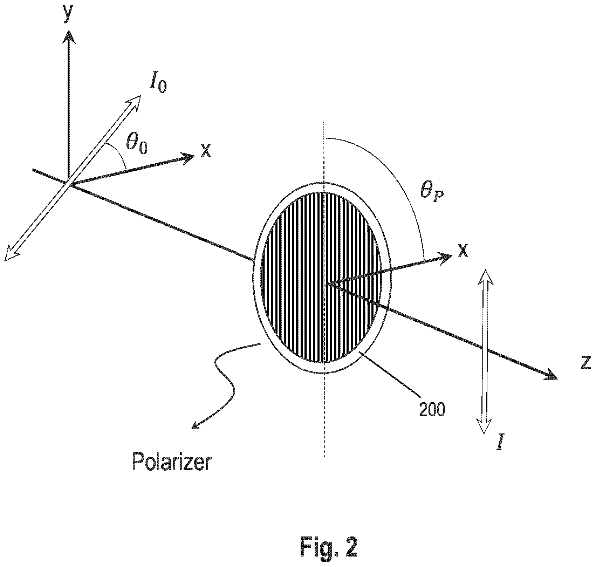

Fig. 1 illustrates a conventional method to achieve this with the use of optical polarizers. An optical polarizer works by allowing light waves of a specific polarization to pass through while blocking light waves in the orthogonal direction. Fig. 2 shows the scheme of a linear polarizer. Fig. 2 shows an example of a linear polarizer 200 for filtering a linearly polarized light beam with intensity $I_0$ and rotated by $\theta_0$ with respect to the x axis.

Malus' law states that when a perfect polarizer is placed in a polarized beam of light, the irradiance *I* of the transmitted light is given by (E. Collett, Field Guide to Polarization, SPIE Press, Bellingham, WA (2005)):

$$I = I_0 \cos^2(\theta_p - \theta_0), \tag{3}$$

where $\theta_p$ is the polarizer's axis angle with the horizontal axis and $\theta_o$ is the angle of the initial polarization direction with the horizontal axis. Consequently, to filter linearly polarized light, it suffices to adjust the polarizer orthogonal ($\theta_p$ - $\theta_0$ = 90°) to the incoming polarization direction.

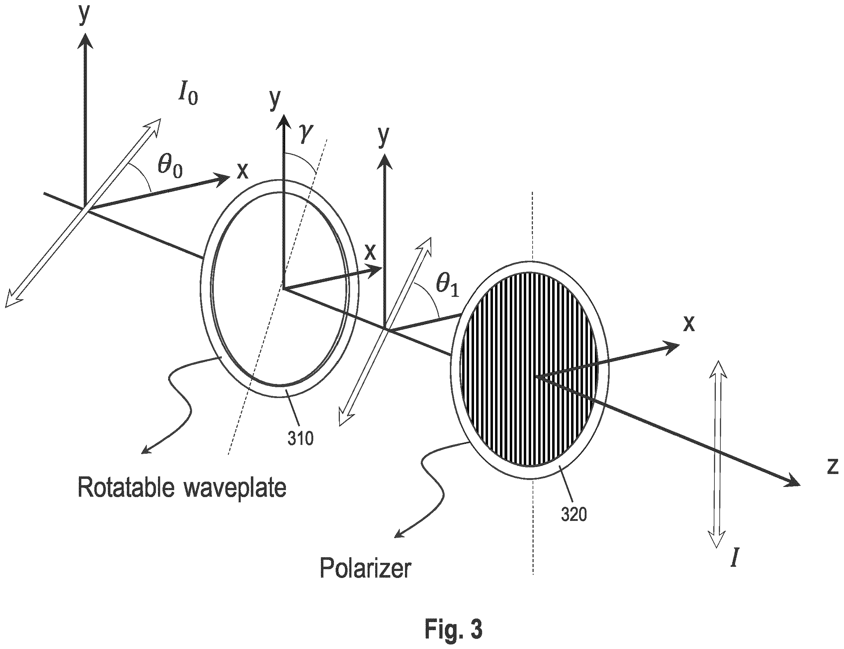

Alternatively, waveplates and polarizers may be used for polarization filtering of light, using a rotatable waveplate 310 followed by a fixed polarizer 320 (such as the one shown in Figure 2), as depicted in Fig. 3. The advantage of this approach is that by combining waveplates one can transform any incoming polarization state into any other polarization state, providing greater flexibility, especially when the incoming beam is not linearly polarized. Therefore, instead of rotating the polarizer (as suggested above), waveplates can be manipulated such to alter the polarization state and filter it with a fixed polarizer. In Fig. 3, a waveplate 310 rotated by an angle $\gamma$ (w.r.t the y axis) transforms the incoming linearly polarized light from an angle $\theta_o$ to $\theta_1$. Fig. 3 shows an illustration of the setup containing the waveplate 310 and the fixed polarizer 320. By rotating the waveplate, it is possible to alter the incoming polarization state into the polarizer.

Waveplates work by inducing a retardance between the *x* and *y* components of the photon's electric field. Adopting Jones notation, this operation can be described by the following equation (Jones Calculus, from a Field Guide to Polarization, SPIE):

$$\begin{bmatrix} x' \\ y' \end{bmatrix} = \begin{bmatrix} 1 & 0 \\ 0 & e^{-j\phi} \end{bmatrix} \begin{bmatrix} x \\ y \end{bmatrix}, \tag{4}$$

where *x'* and *y'* are the horizontal and vertical components of the photons electrical field at the output of the waveplate, respectively. The phase $\phi$ corresponds to the retardance between the *x* and *y* components. The most used waveplates are the so-called half-waveplate (HWP) and quarter-waveplate (QWP), where $\phi = \pi$ and $\phi = \pi/2$, respectively.

The rotation of a waveplate can be mathematically represented as follows (Jones Calculus, from a Field Guide to Polarization, SPIE):

$$\begin{bmatrix} x' \\ y' \end{bmatrix} = \begin{bmatrix} \cos(\gamma) & -\sin(\gamma) \\ \sin(\gamma) & \cos(\gamma) \end{bmatrix} \begin{bmatrix} 1 & 0 \\ 0 & e^{-j\phi} \end{bmatrix} \begin{bmatrix} \cos(\gamma) & \sin(\gamma) \\ -\sin(\gamma) & \cos(\gamma) \end{bmatrix} \begin{bmatrix} x \\ y \end{bmatrix} \tag{5}$$

In the specific case of HWP ($\phi = \pi$), for instance, Equation 5 reduces to:

$$\begin{bmatrix} x' \\ y' \end{bmatrix} = \begin{bmatrix} \cos(2\gamma) & \sin(2\gamma) \\ \sin(2\gamma) & -\cos(2\gamma) \end{bmatrix} \begin{bmatrix} x \\ y \end{bmatrix}. \tag{6}$$

This means that a HWP rotated by $\gamma = \pi/4$ transforms a horizontally polarized light ( $\begin{bmatrix} x \\ y \end{bmatrix} = \begin{bmatrix} 1 \\ 0 \end{bmatrix}$ ) into vertically polarized light ( $\begin{bmatrix} x' \\ y' \end{bmatrix} = \begin{bmatrix} 0 \\ 1 \end{bmatrix}$ ).

There are multiple types of optical polarizers, some of them are categorized below. Absorption Polarizers use materials that absorb light waves not aligned with the polarizer's axis. Birefringent Polarizers exploit the property of birefringence in certain crystals (like calcite) to split incoming light into two polarized beams. One beam is transmitted, and the other is deflected or absorbed. Reflection Polarizers use Brewster's angle to reflect unwanted polarized light, allowing only the desired polarization to transmit through.

To incorporate these devices into optical fiber systems, they are mounted on rotatable mechanical parts that allow for the adjustment of the polarizer's axis. The light from the optical fiber is then decoupled into free space to pass through the polarizer. After the polarization filtering, the light is coupled back into the optical fiber. This leads to the following challenges: Alignment Precision: Rotatable polarizers require precise alignment to achieve the desired polarization state. Maintaining this precision can be difficult, especially in environments subject to mechanical vibrations or temperature fluctuations, which can disrupt the alignment and degrade the performance. Insertion Loss: Introducing a rotatable polarizer into a fiber optic system typically results in additional insertion loss. The light transitions from the fiber to the polarizer and back into the fiber, a process that is inherently lossy due to imperfect coupling and scattering. Size and Space Constraints: Rotatable polarizers and their associated control mechanisms can be bulky, making it challenging to integrate them into compact or densely packed fiber optic systems. This can limit their use in applications where space is a critical constraint. Environmental Sensitivity: The performance of rotatable polarizers can be affected by environmental factors such as temperature changes, humidity, and dust. These factors can impact the mechanical parts of the polarizer, leading to performance degradation over time. Back Reflections: The introduction of a rotatable polarizer can cause back reflections into the fiber optic system. These reflections can interfere with the signal, leading to noise and reduced signal quality. Managing and minimizing these reflections requires careful design and additional components such as isolators.

To address these challenges, the polarizer can be replaced with a set comprising fiber-based retarders (waveplates) and a fixed in-line optical polarization filter. The fiber-based retarders can adjust the polarization direction when subject to mechanical stress, while the in-line optical polarization filter allows a fixed component of the light to pass through.

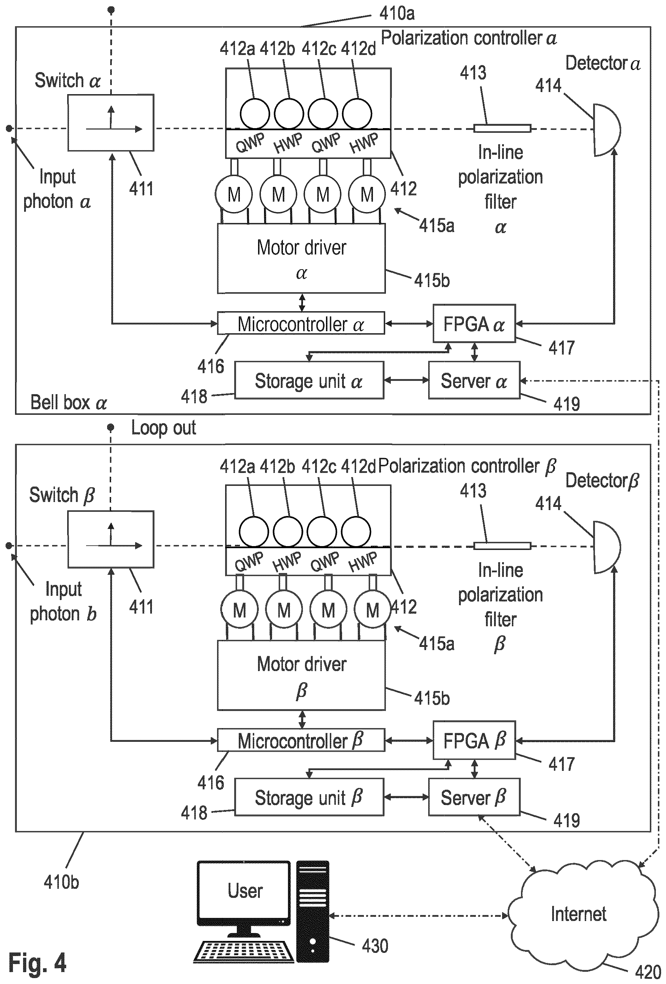

Various examples of the present disclosure relate to a measuring apparatus, in the following also denoted Bell box (bell box 410a, 410b shown in Fig. 4), which can be used in pairs to determine a degree of quantum entanglement. Fig. 4 shows a schematic diagram of an example of two measuring apparatuses (Bell boxes) 410a, 410b, Bell boxes $\alpha$ and $\beta$, and of a measuring system comprising the two measuring apparatuses (Bell boxes) 410a, 410b. Fig. 4 shows a stress-induced fiber-based system for controlling and measuring entangled photons. In summary, the setup comprises or consists of two boxes, the so-called Bell boxes $\alpha$ and $\beta$, that perform the filtering, detection of the photons *a* and *b*, respectively, and forwarding of click events to an end user for the consequent post-processing. For example, the measuring system shown in Fig. 4 may be used to perform the CHSH test.

At the input of each Bell box 410a, 410b, a 1x2 opto-mechanical switch 410 directs the incoming photon either to a polarization controller or to a loop/bypass output. At the polarization controller $\alpha$ and $\beta$ 412, the polarization state of the entangled photons is rotated. This rotation is performed by motorized fiber-based retarders, in particular stress-induced birefringence-based polarization retarders. In other words, the measuring apparatuses 410a, 410b each comprise at least one fiber-based polarization retarder, e.g., four fiber-based polarization retarders 412a-412d as shown in Fig. 4, configured to adjust a polarization state of a photon signal being transmitted through a fiber using stress-induced birefringence. Its objective is two-fold: calibrate the input polarization state from an arbitrary to a linear polarization state, and rotate the linear polarization state, effectively setting the angles $\alpha$ and $\beta$ from Equation 1. For this purpose, the measuring apparatus 410a, 410b may comprise one or more first fiber-based polarization retarders 412a-c for adjusting the polarization state of the photon signal to calibrate the photons to a desired bell state (to calibrate the input polarization state from an arbitrary to a linear polarization state). In particular, the one or more first fiber-based polarization retarders 412a-c may be configured to reconstruct an original Bell state of the photon signal that may be possibly disturbed during the fiber transmission. The measuring apparatus 410a, 410b may (further) comprise a second fiber-based polarization retarder 412d for adjusting the polarization state of the photon signal from the desired bell state according to an angle defined by a measuring procedure for determining the degree of quantum entanglement of the photons (to set the angles $\alpha$ and $\beta$ from Equation 1).

In the example of Fig. 4, each polarization controller comprises four retarders, namely, two HWP and two QWP, disposed in the order shown in Fig. 4 (QWP-HWP-QWP-HWP). Thus, the one or more first fiber-based polarization retarders may comprise at least one fiber-based polarization retarder 412b for affecting a half wavelength phase shift and at least one, presently two, fiber-based polarization retarder 412a, 412c for affecting a quarter wavelength phase shift. The second fiber-based polarization retarder may correspond to a single fiber-based polarization retarder 412d for affecting a half wavelength phase shift. These retarders are controlled by (four) servo motors 415a, which are connected to a motor driver 415b. Thus, the measuring apparatus may comprise at least one motor 415a for tilting the at least one fiber-based polarization retarder. A controller, e.g., the motor driver 415b, e.g., in combination with the micro-controller 416 and/or other controllers 417-419, may be configured to control the at least one motor to control the at least one fiber-based polarization retarder to adjust the polarization state of the photon signal.

After the polarization of the entangled photons is rotated, the filtering task is taken over by the in-line linear polarization filters 413. Then, the filtered photons are finally detected by single photon detectors 414. The click events from each detector are registered (time-tagged) by an FPGA 417, stored in storage unit 418 and then forwarded, by a server 419, via Internet 420 to an end user 430, who is in possession of a script/program responsible for the post-processing routines.

Thus, the respective measuring apparatus 410a, 410b may comprise a polarization filter 413 for filtering the photon signal transmitted through the fiber, a detector 414 for detecting photons of the photon signal after the photon polarization state of the photon signal is adjusted by the at least one fiber-based polarization retarder 412a-412d and the photon signal is filtered by the polarization filter, and a controller 415b-419 configured to control the at least one fiber-based polarization retarder 412a-412d to adjust the polarization state of the photon signal. In particular, the controller may be configured to control the at least one fiber-based polarization retarder 412a-412d according to a measuring procedure, e.g., a measuring procedure comprising a plurality of stages. In particular, the polarization state of the photon signals may be adjusted by at least two different angles over a course of the measuring procedure. In addition, the controller may be configured to determine information related to a photon count measured by the detector during the respective stages of the measuring procedure. This information related to the photon count may be provided to the end user 430, so that the computer of the end user can determine the degree of quantum entanglement. Thus, the controller 415b-419 may be configured to provide the information related to the photon count measured by the detector to a second measuring apparatus or to a remote evaluation device 430. Alternatively, or additionally, one (or both) of the measuring apparatuses may determine the degree of quantum entanglement locally. In this case, the controller 415b-419 may be configured to obtain second information related to a photon count measured by a second detector 414 of a second measuring apparatus 410a, 410b from the second measuring apparatus 410a, 410b, and to determine the degree of quantum entanglement of the photons of the photon signal based on the information related to the photon count measured by the detector 414 and based on the second information related to the photon count measured by the second detector 414.

The first key sub-element discussed in the proposed concept is the polarization controller 412. As can be observed in Fig. 4, the setup possesses two independent polarization controllers 412 ($\alpha$ and $\beta$) that transform the polarization state of the entangled photons $a$ and $b$. In the example shown in Fig. 4, each polarization controller 412 consists of or comprises four fiber-based retarders 412a-412d, as previously mentioned.

The fiber retarders shown in Fig. 4 utilize stress-induced birefringence to alter the polarization in single-mode fiber (see R. Ulrich, S.C. Rashleigh, and W. Eickhoff, "Bending-induced birefringence in single-mode fibers" Opt. Lett. 5, 273-275 (1980)). For that, the single-mode fiber is looped around three independent spools (coils) to form three independent fiber retarders. The amount of birefringence induced in the fiber depends on the fiber cladding diameter, the fixed spool diameter, the number of fiber loops per spool, and the light wavelength. This birefringence induces a retardance of (see R. Ulrich, S.C. Rashleigh, and W. Eickhoff, "Bending-induced birefringence in single-mode fibers" Opt. Lett. 5, 273-275 (1980))

$$\phi = 2\pi^2 aN \frac{d^2}{\lambda D}, \qquad (7)$$

where $a$ is the fiber photo-elastic coefficient, $\lambda$ is the light wavelength, d is the fiber cladding diameter, $N$ is the number of loops, and $D$ is the coil diameter.

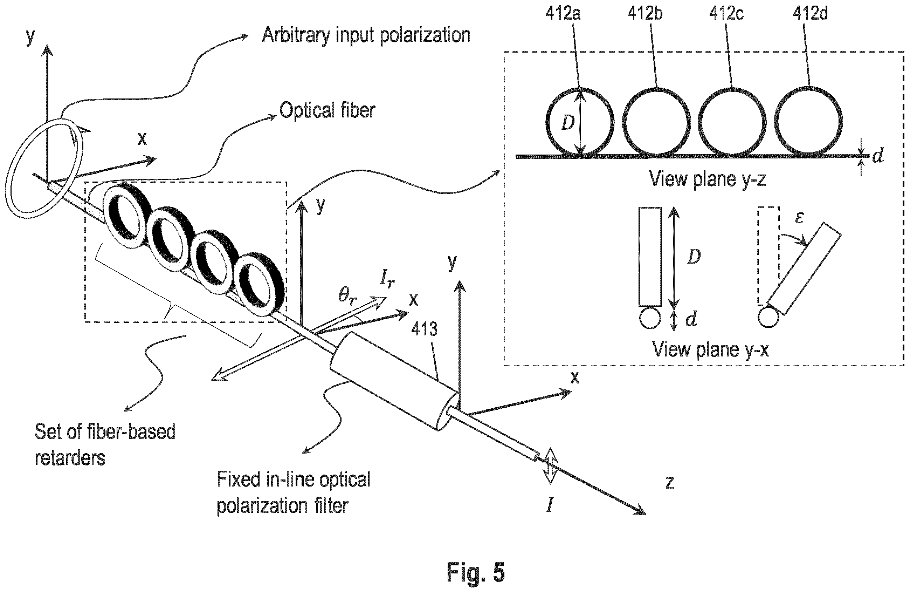

The fast axis of the fiber, which is in the plane of the spool, is adjusted with respect to the transmitted polarization vector by rotating the paddle by an angle $\varepsilon$ to twist the fiber (see Fig. 5). Fig. 5 illustrates how each polarization retarder 412a-d can be independently rotated by an angle $\varepsilon$, thus twisting the fiber. Twisting regions of fiber by rotating a paddle by an angle $\varepsilon$ corresponds to a rotation of the retarder by an angle:

$$\gamma = \eta \, \varepsilon. \qquad (8)$$

where $\eta$ is a fixed coefficient of the fiber (R. Ulrich, A. Simon, "Polarization optics of twisted single-mode fibers" Appl. Opt. 18, 2241-2251 (1979)). Equations 7 and 8 demonstrate how to map the physical parameters of the fiber and spools to the retardance $\phi$ and the rotation angle $\gamma$, thus, fully determining the mathematical model shown in Equation 5.

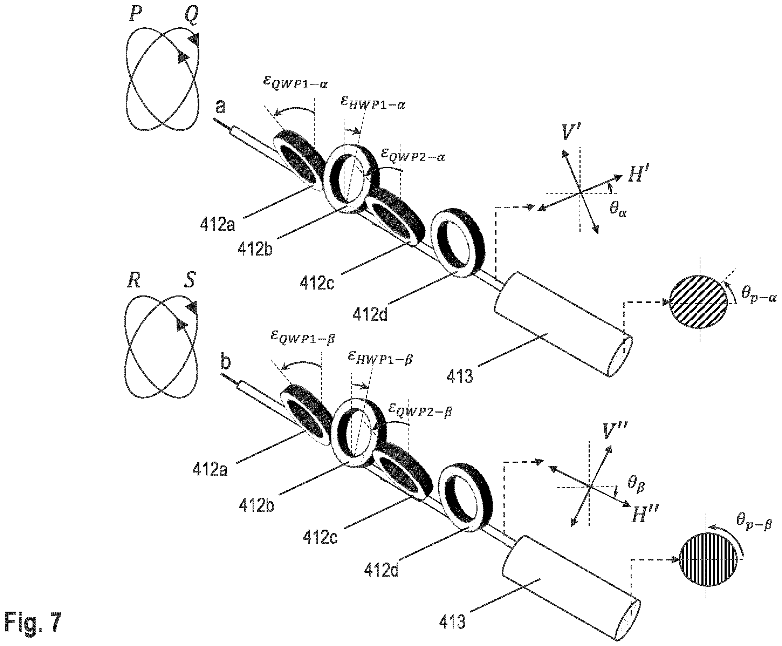

To transform an arbitrary input polarization state into another arbitrary output polarization state, a combination of three retarders (QWP, HWP, QWP) suffices. In the setup shown in Fig. 4, the first three retarders, i.e., QWP 412a, HWP 412b, and QWP 412c, are calibrated such to transform the input polarization state, which is assumed to be arbitrary, into a linear polarization state. More details about this calibration are discussed in connection with Figs. 7 to 9. The last retarder, i.e., the HWP 412d, simply rotates the generated linearly polarized light.

Assuming that the present disclosure targets commercial communication systems, some standard values for the construction of the QWP and HWP are listed in the following table:

| Parameter | QWP specs | HWP specs |
|---|---|---|
| $a$: constant of silica | 0.133 | 0.133 |
| $\lambda$: telecom light wavelength | 1550 nm | 1550 nm |
| $d$: commercial fiber cladding diameter | 125 $\mu$m | 125 $\mu$m |
| $N$: number of loops | 1 | 2 |
| $D$: coil diameter | 17.3 mm | 17.3 mm |
| $\phi$: Retardance | 1.531 $\approx \pi/2$ | 3.061 $\approx \pi$ |

The table shows values used for the construction of the retarders by using commercial parameters.

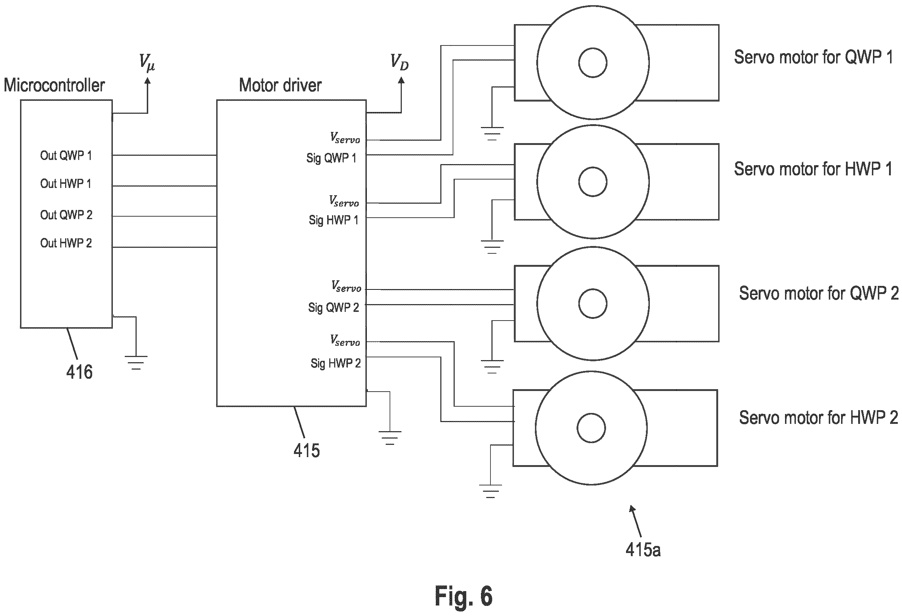

The rotation of the fiber-based retarders 412a-412d is motorized, that is, each retarder is mechanically attached to a servo motor that controls the angle $\varepsilon_p$, where $p$ stands for the paddle's index. An example electrical schematic of the servo motor control of a single Bell box 410a, 410b is shown in Fig. 6. For example, microcontroller 416 may provide 4 pulse width modulated (PWM) signals to a motor driver 415, denoted: Out QWP/HWP 1/2. These 4 signals may correspond to or represent the angular position of the retarder's coil. The motor driver 415b may relay the signals Sig QWP/HWP 1/2 to the servo motors along with a power supply $(V_{servo})$. The microcontroller 416, the motor driver 415bb and the servo motors 415 may be commonly grounded.

In the proposed concept, the retarders may be calibrated. As the incoming polarization state can have an arbitrary state, due to the influence of fiber transmission, the first three retarders (QWP1 412a, HWP1 412b, QWP2 412c) may be used to reconstruct the original Bell state. This may be achieved by performing a calibration procedure. In particular, the controller 415b-419 may be configured to perform a calibration procedure to determine one or more calibration parameters suitable for controlling the one or more first fiber-based polarization retarders 412a-c such, that the one or more first fiber-based polarization retarders 412a-c adjust the polarization state of the photon signal to the original bell state. This calibration procedure is described with the help of the illustration shown in Fig. 7. Fig. 7 illustrates how the polarization state of photons of a photon signal is adjusted to reconstruct an original bell state and subsequently filtered by a linear polarizer. In Fig. 7, the arbitrary entangled state $|\Omega\rangle$ is received by the polarization controllers 412 of both Bell boxes 410a, 410b, then, reconstructed to the original Bell state and filtered by the linear polarizer. Each retarder 412a-c is rotated by an angle $\varepsilon$ such to reconstruct the original Bell state. In Fig. 7, $\theta_{\alpha/\beta}$ are the rotation angles of the reconstructed Bell state, and $\theta_{p-\alpha/\beta}$ are rotation angles of the filters' axis.

At the input of the polarization controllers, the entangled state can be written as:

$$|\Omega\rangle = \frac{1}{\sqrt{2}}(|P_a R_b\rangle + |Q_a S_b\rangle) \tag{9}$$

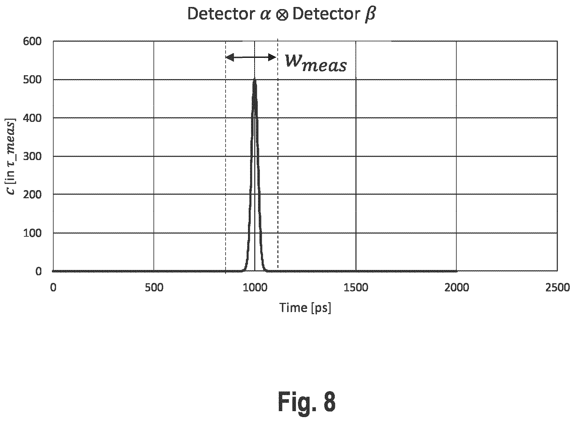

such that $|P\rangle$, $|Q\rangle$, $|R\rangle$, $|S\rangle$ are arbitrary polarization states obeying to $\langle P|Q\rangle = \langle R|S\rangle = 0$. Initially, the rotation angles of the retarders, i.e., $\varepsilon_{QWP1-\alpha/\beta}$, $\varepsilon_{HWP1-\alpha/\beta}$, $\varepsilon_{QWP2-\alpha/\beta}$, $\varepsilon_{HWP2-\alpha/\beta}$, are set to zero. Then, the detection events measured by Detector $\alpha$ 414 and Detector $\beta$ 414 are time-tagged by the FPGA $\alpha$ 417 and FPGA $\beta$ 417, respectively, and may be stored in storage units 418 (e.g., SD card) as .dat files. The measurement's duration $(\tau_{meas})$ can be configured by the user and may be physically restricted to the storage capacity of the SD card. When the measurement is finished, the .dat files from Bell box $\alpha$ 410a and Bell box $\beta$ 410b may be transferred over Internet 420 to the user 430 and post-processed by a computer program. The main goal of this program is to calculate the coincidence counts between the detection events of Bell box $\alpha$ and Bell box $\beta$ by creating a time histogram (e.g., by using a time histogram application programming interface call of the software being used with the time tagger). Fig. 8 shows an example of the time histogram for the coincidence counts between two measuring apparatuses 410a, 401b, Detector $\alpha$ and Detector $\beta$. In summary, this histogram shows that after Detector $\alpha$ (reference) is fired, most photons hit Detector $\beta$ (click) with 1000 ps of delay.

The curve $c$ shown in Fig. 8 may be integrated within the measurement window ($w_{meas}$, set by the user) and the total coincident counts $C$, i.e., $C = \Sigma_{w_{meas}} c$, are estimated.

A gradient-descent optimization may be performed to reduce or minimize $C$ by tuning $\varepsilon_{QWP1-\alpha/\beta}$, $\varepsilon_{HWP1-\alpha/\beta}$,

$\varepsilon_{QWP2-\alpha/\beta}$ (Fig. 7), i.e., the tilting angles. In other words, the calibration procedure may comprise varying a tilting angle of the one or more first fiber-based polarization retarders 412a-c according to a gradient descent algorithm to determine a tilting angle or combination of tilting angles that adjust a polarization state of the photon signal, e.g., such, that the resulting linear polarization is substantially orthogonal to a polarization of the polarization filter, as evidenced by a reduction of photons arriving at the detector. In practical terms, reducing or minimizing $C$ means that the state $|\Omega\rangle$ (in Equation 9) is transformed into the state

$$|\Lambda\rangle = \frac{1}{\sqrt{2}} (|H'_a V''_b\rangle + |V'_a H''_b\rangle), \qquad (10)$$

illustrated in Fig. 7 and the polarization axis of the in-line polarization filters $\alpha$ and $\beta$ are aligned with $|H'\rangle$ and $|H''\rangle$, respectively, i.e., $\theta_\alpha - \theta_{p-\alpha} = \theta_\beta - \theta_{p-\beta} = 0$. As soon as $C$ drops below a pre-defined threshold, the calibration process is interrupted and the (calibration) parameters $\varepsilon_{QWP1-\alpha/\beta}$, $\varepsilon_{HWP1-\alpha/\beta}$, $\varepsilon_{QWP2-\alpha/\beta}$ are fixed.

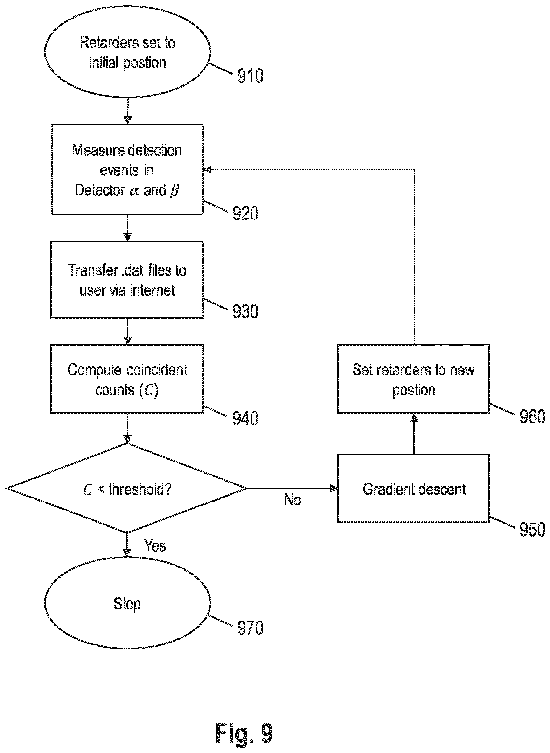

This calibration or optimization process is summarized in the flow diagram depicted in Fig. 9. Fig. 9 shows a flow chart of an example of a calibration process for tuning an angular positioning of polarization retarders. The calibration process comprises setting the retarders to an initial position (910), measuring detection events in detectors $\alpha$, $\beta$ (920), transferring the .dat files to the user via the internet (930). computing the coincident counts (940). If C is at least the threshold, gradient descent is performed (950), and the retarders are set to a new position (960) to measure detection events (920) anew. If C is smaller than the threshold, the process stops (970).

In the example given above, the calibration is performed by the user device 430 shown in Fig. 4. In this case, the controller 415b-419 may be configured to determine information related to a calibration photon count measured by the detector 414 during the calibration procedure, and to provide the information related to the calibration photon count to a remote evaluation device 430 for performing the gradient descent algorithm. Alternatively, the gradient descent algorithm may be performed by the controller 415b-419 of the respective measuring apparatus 410a, 410b. In this case, the controller may be configured to determine the information related to the calibration photon count measured by the detector 414 during the calibration procedure, and to perform the gradient descent algorithm based on the information related to the calibration photon count measured by the detector 414.

After this calibration process is finalized, the mapping between the angles $\alpha$, $\beta$ (Equation 1) and the physical rotation of the HWP2 retarders, i.e., $\varepsilon_{HWP2-\alpha}$, $\varepsilon_{HWP2-\beta}$, respectively, may be performed.

The process for determining $\alpha$ and $\beta$ is described as follows. First, the polarization controller $\beta$ is maintained fixed at its calibration values. Then, $\varepsilon_{HWP2-\alpha}$ is rotated from -90° to 90° in steps of $\kappa$ degrees. For each value of $\varepsilon_{HWP2-\alpha}$, $C$ is measured in an identical approach to the scheme illustrated in Fig. 9, i.e., (I) detection events in Detector $\alpha$ and $\beta$ are measured, (II) .dat files are transferred to user, (III) computer estimates $C$. The recorded values of $C$ (as a function of $\varepsilon_{HWP2-\alpha}$) are normalized to the maximum value, thus yielding $\overline{C_\alpha}$, which is used to fit the function:

$$\overline{C_\alpha} = \sin^2(A * \alpha), \qquad (11)$$

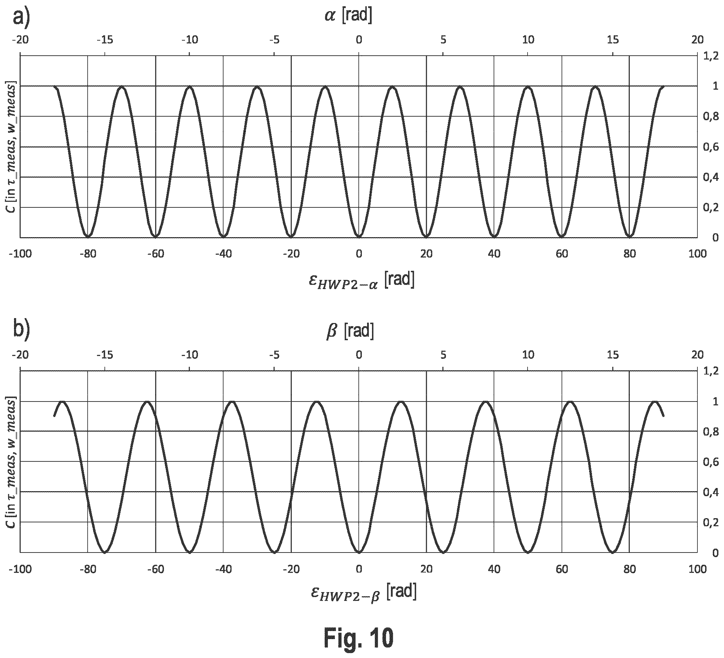

then, the mapping $\varepsilon_{HWP2-\alpha} \leftrightarrow \alpha$ can be finally created, as illustrated in the example shown in Fig. 10 a). For instance, in the example of Fig. 10 a), a rotation of $\varepsilon_{HWP2-\alpha} = 10$ rad corresponds to a rotation $\alpha = \frac{\pi}{2}$ .

The same logic may be applied to the polarization controller $\beta$ in order to map $\varepsilon_{HWP2-\beta} \leftrightarrow \beta$. For that, $\varepsilon_{HWP2-\alpha}$ is set to zero. Then, $\varepsilon_{HWP2-\beta}$ is rotated from -90° to 90° in steps of $\kappa$ degrees. For each value of $\varepsilon_{HWP2-\beta}$, $C$ is measured. The recorded values of $C$ (as a function of $\varepsilon_{HWP2-\beta}$) are normalized to the maximum value, thus yielding $\overline{C_\beta}$, which is used to fit the function:

$$\overline{C_\beta} = \sin^2(B * \beta). \qquad (12)$$

The mapping $\varepsilon_{HWP2-\beta} \leftrightarrow \beta$ can be finally created, as illustrated in the example shown in Figure 10 b). Fig. 10 shows curves used to map the retarder's rotation angles $\varepsilon_{HWP2-\alpha}$, $\varepsilon_{HWP2-\beta}$ to $\alpha$, $\beta$, respectively.

After this process is completed, the determination of $C(\alpha, \beta)$ becomes simple and, consequently, the Equations 1 and 2 can be computed.

For determining $C(\alpha, \beta)$, the angles $\varepsilon_{HWP2-\alpha}$ and $\varepsilon_{HWP2-\beta}$ may be set to values that are mapped to the angles $\alpha$ and $\beta$, respectively. Thus, the measuring procedure defines a plurality of combinations of polarization adjustments (sixteen in the present case) to be performed by the two or more apparatuses during the plurality of stages, with a separate combination of polarization adjustments being performed at each stage of the plurality of stages. For each of the of the sixteen combinations described above, $C(\alpha, \beta)$ is computed (for $t_{meas}$, $w_{meas}$) in a similar approach to the previous steps, i.e., (I) detection events in Detector $\alpha$ and $\beta$ are measured, (II) .dat files are transferred to user, (III) computer estimates $C$.

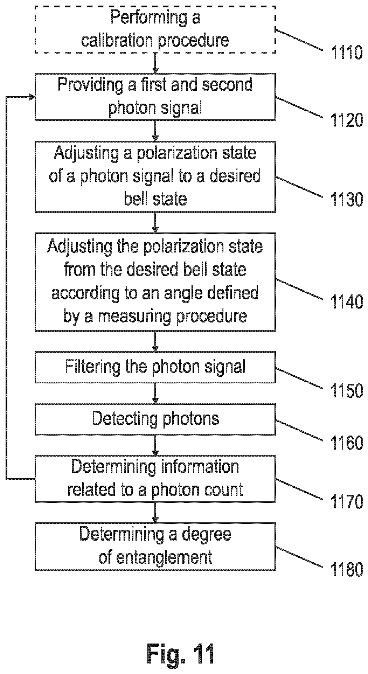

In connection with Figs. 4 to 10, the proposed concept was illustrated in connection with the measuring apparatuses 410a, 410b of Fig. 4 and the corresponding measuring system. The proposed concept may likewise be embodied in a corresponding method shown in Fig. 11. Fig. 11 shows a flow chart of an example of a method for determining a degree of quantum entanglement of photons of a photon signal. The method comprises providing 1120, by an entangled photon source, a first and a second photon signal comprising entangled photons to a first and second measuring apparatus. The method comprises adjusting 1130, 1140, by at least one fiber-based polarization retarder of the respective measuring apparatus, a polarization state of the first and second photon signal according to a measuring procedure comprising a plurality of stages. This may comprise adjusting 1130, by respective one or more first fiber-based polarization retarders of the respective measuring apparatus, the polarization state of the respective photon signal to calibrate the photons to a desired bell state, and adjusting 1140, by a respective second fiber-based polarization retarder, the polarization state of the photon signal from the desired bell state according to an angle defined by the measuring procedure. The measuring procedure defines a plurality of combinations of polarization adjustments to be performed by the first and second measuring apparatus during the plurality of stages. In particular, the polarization state is adjusted by the respective at least one fiber-based polarization retarder using stress-induced birefringence. The method comprises filtering 1150, by a polarization filter of the respective measuring apparatus, the respective photon signal. The method comprises detecting 1160, by a detector of the respective measuring apparatus, photons of the respective photon signal after the polarization state of the photon signal is adjusted by the respective at least one fiber-based polarization retarder and the photon signal is filtered by the respective polarization filter. The method comprises determining 1170 first and second information related to a photon count measured by the respective detector during the respective stages of the measuring procedure. The method comprises determining 1180 a degree of entanglement of the photons of the first and second photon signal based on a correlation or coincidence of detected photons indicated by the first and second information related to the photon count measured by the detectors of the first and second measurement device.

It is evident, that the method is based on the functionality provided by the measuring apparatuses 410a, 410b (and, optionally, user device 430) and measuring system shown in Fig. 4 to 10. Accordingly, features introduced in connection with Figs. 4 to 10 may likewise be included in the corresponding method of Fig. 11.

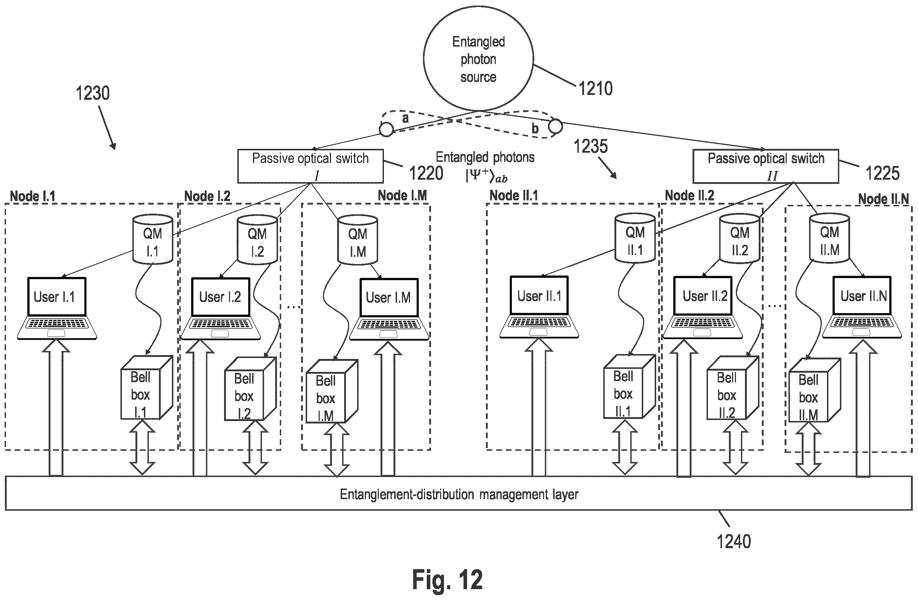

The proposed Bell boxes may be used in a networkwide context. For example, multiple Bell boxes may be deployed in entanglement distribution networks, as shown in the next example, and perform CHSH tests between any incoming photons of two arbitrary nodes. As can be seen in Fig. 12, this illustrative setup comprises an entangled photon source 1210 that generates entangled photons $a$ and $b$, which are delivered via passive optical switches 1220, 1225 to two sub-networks, namely, I and II, which have M and N nodes (I.1, I.2,..., I.M, II.1, II.2,..., II.N) 1330, 1335 respectively. Each node primarily comprises or consists of a quantum memory (QM) that stores the transmitted photon for certain period of time, an (optional) user station that generically receives and post-processes one of the entangled photons, and a Bell box (e.g. as introduced in connection with Fig. 4 to 10), responsible for performing part of the CHSH test. In particular, each quantum node may comprise the measuring apparatus introduced above and a quantum memory. Fig. 12 shows a schematic diagram of a plurality of quantum nodes using measuring apparatuses to synchronize quantum memories. In Fig. 12, each node of an entanglement distribution network is equipped with a Bell box. CHSH tests can be performed between any two nodes of the network and used to synchronize QMs.

In summary, any QM depicted in Fig. 12 enables a temporary storage of one of the entangled photons and holds it until its twin arrives at another node. In this way, QMs somehow secure the simultaneous arrival of the entangled photon pair at two different user stations, thus compensating for difference in fiber lengths along the transmission path. This synchronization process utilizes that the incoming photons are tested for detection of entanglement. For that, a probe output of a QM is connected to a Bell box (as shown in Fig. 12). Then, the Bell parameter ($S$) is estimated between the emitted photons from the two QMs. Since the stored photons are usually emitted in different temporal modes (see Clausen, C., Usmani, I., Bussières, F. et al. Quantum storage of photonic entanglement in a crystal. Nature 469, 508-511 (2011). https://doi.org/10.1038/nature09662), for synchronizing the entangled photons it suffices to find the optimal temporal mode for each QM that maximizes $S$. Thus, a controller of the quantum node may be configured to determine a time delay of a photon signal comprising entangled photons arriving at the quantum node relative to one or more corresponding photon signals arriving at one or more other quantum nodes using the measuring apparatus, and to control the quantum memory based on the time delay.

The following example narrates the synchronization of nodes I.1 and II.2, thus facilitating the comprehension of this mechanism. For example, assuming that M I.1 receives the photon $a$ 200 ns before QM II.2 receives photon a. Both QMs can store- and release photons in different temporal modes, thus implying different storage times, e.g., 100 ns, 200, 300 ns. In this configuration, it is clear that an optimal $S$ will be found when the CHSH test is carried out between the photons emitted 100 ns after absorption by QM II.2 and 300 ns by QM I.1, as it corresponds to a 200 ns delay compensation.

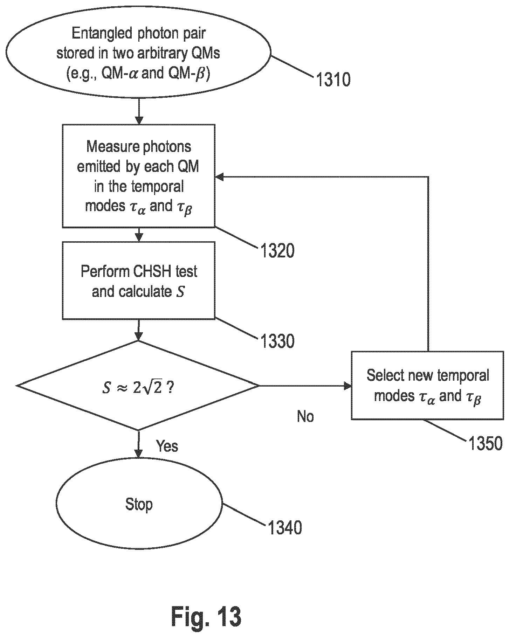

This mechanism is represented in Fig. 13. shows a flow chart of an example mechanism for synchronizing two quantum memories, i.e., QM-$\alpha$ and QM-$\beta$. The process starts (1310) from an entangled photon pair stored in two arbitrary QMs QM-$\alpha$ and QM-$\beta$. Then, the photons emitted by each QM are measured in the temporal modes $\tau_a$ and $\tau_b$ (1320), and

the CHSH test is performed, and S is calculated (1330). If $S \approx 2\sqrt{2}$, then the process stops (1340). If not, different temporal modes $\tau_a$ and $\tau_b$ are selected (1350).

The mechanism represented in Fig. 13 may be coordinated by an entanglement-distribution management layer 1240, as depicted in Fig. 12. This layer may communicate bidirectionally with the Bell boxes as it requests the measurements on-demand from the from them. The CHSH test and the consequent extraction from *S* may then be performed internally by the layer. After the determination of the temporal modes that synchronize the pair of nodes, the entanglement-distribution layer unidirectionally provides the information to the involved users, who are now properly ready to perform their tasks.

The proposed concept may provide automated measurement and proof of entanglement in fiber-based systems. The proposed concept may further provide a fiber-based device (Bell box, polarization controller), which leads to lower fabrication costs (favors scalability), Lower coupling losses (no need for free-space-to-fiber conversion), more robustness to environmental constraints and to a simpler electromechanical design. In networkwide contexts, the proposed concept can be used for synchronization of quantum memories.

Examples may involve or relate to computer programs, including program codes to execute one or more of the mentioned methods when the program is executed on a computer, processor, or other programmable hardware component. As a result, steps, operations, or processes from various methods described above can also be executed by computers, processors, or other programmable hardware components. Examples may additionally cover program storage devices, such as digital data storage media, which are machine-, processor-, or computer-readable and encode and/or contain machine-executable, processor-executable, or computer-executable programs and instructions. These devices may include or be digital storage devices, magnetic storage media like magnetic disks and tapes, hard disk drives, or optically readable digital data storage media, for instance. Other examples encompass computers, processors, control units, field programmable logic arrays (FPLAs), field programmable gate arrays (FPGAs), graphics processing units (GPUs), application-specific integrated circuits (ASICs), integrated circuits (ICs), or system-on-a-chip (SoC) systems that are programmed to carry out the operations of the aforementioned methods. In simpler terms, examples may involve computer programs and storage media comprising computer programs, as well as hardware components like processors and control units, which can be programmed to execute the methods described above.

When certain aspects are mentioned in relation to a device or system, they should also be considered as descriptions of the corresponding methods. For example, a block, component, or functional aspect of the device or system may correspond to a method operations or feature of the related method. Therefore, aspects described regarding a method should also be understood as depicting a corresponding element, property, or functional feature of the corresponding device or system. In simpler terms, if something is described in relation to a device or system, it can also be applied to the corresponding method, and vice versa.

Many modifications and other embodiments of the proposed concept set forth herein will come to mind to the one skilled in the art to which the proposed concept pertains having the benefit of the teachings presented in the foregoing description and the associated drawings. Therefore, it is to be understood that the proposed concept is not to be limited to the specific examples disclosed and that modifications and other examples are intended to be included within the scope defined by the appended claims. Although specific terms are employed herein, they are used in a generic and descriptive sense only and not for purposes of limitation.

**Claims**

1. Measuring apparatus (410a, 410b) for determining a degree of quantum entanglement of photons of a photon signal, the measuring apparatus comprising at least one fiber-based polarization retarder (412a, 412b, 412c, 412d) configured to adjust a polarization state of a photon signal being transmitted through a fiber using stress-induced birefringence.

2. The measuring apparatus (410a, 410b) according to claim 1, wherein the measuring apparatus (410a, 410b) comprises one or more first fiber-based polarization retarders (412a, 412b, 412c) for adjusting the polarization state of the photon signal to calibrate the photons to a desired bell state and a second fiber-based polarization retarder (412d) for adjusting the polarization state of the photon signal from the desired bell state according to an angle defined by a measuring procedure for determining the degree of quantum entanglement of the photons.

3. The measuring apparatus (410a, 410b) according to claim 2, wherein the one or more first fiber-based polarization retarders comprise at least one fiber-based polarization retarder (412b) for affecting a half wavelength phase shift and at least one fiber-based polarization retarder (412a, 412c) for affecting a quarter wavelength phase shift.

4.  The measuring apparatus (410a, 410b) according to one of the claims 2 or 3, wherein the second fiber-based polarization retarder (412d) corresponds to a single fiber-based polarization retarder for affecting a half wavelength phase shift.

5.  The measuring apparatus (410a, 410b) according to one of the claims 2 to 4, wherein the one or more first fiber-based polarization retarders (412a, 412b, 412c) are configured to reconstruct an original Bell state of the photon signal that is possibly disturbed during the fiber transmission.

6.  The measuring apparatus (410a, 410b) according to one of the claims 1 or 5, wherein the measuring apparatus (410a, 410b) comprises a polarization filter (413) for filtering the photon signal transmitted through the fiber, a detector (414) for detecting photons of the photon signal after the photon polarization state of the photon signal is adjusted by the at least one fiber-based polarization retarder and the photon signal is filtered by the polarization filter, and a controller (415b, 416, 417, 418, 419) configured to control the at least one fiber-based polarization retarder to adjust the polarization state of the photon signal according to a measuring procedure comprising a plurality of stages, wherein the polarization state of the photon signals is adjusted by at least two different angles over a course of the measuring procedure, and to determine information related to a photon count measured by the detector (414) during the respective stages of the measuring procedure.

7.  The measuring apparatus (410a, 410b) according to claim 6, wherein the measuring procedure is a measuring procedure for two or more measuring apparatuses (410a, 410b), wherein the measuring procedure defines a plurality of combinations of polarization adjustments to be performed by the two or more measuring apparatuses during the plurality of stages, with a separate combination of polarization adjustments being performed at each stage of the plurality of stages.

8.  The measuring apparatus (410a, 410b) according to claim 7, wherein the measuring procedure defines at least sixteen combinations of polarization adjustments to be performed during at least sixteen stages.

9.  The measuring apparatus (410a, 410b) according to one of the claims 6 to 8, wherein the measuring apparatus (410a, 410b) comprises at least one motor (415a) for tilting the at least one fiber-based polarization retarder, wherein the controller (415b, 416, 417, 418, 419) is configured to control the at least one motor to control the at least one fiber-based polarization retarder to adjust the polarization state of the photon signal.

10. The measuring apparatus (410a, 410b) according to one of the claims 6 to 9, wherein the measuring apparatus (410a, 410b) comprises one or more first fiber-based polarization retarders (412a, 412b, 412c) for adjusting the polarization state of the photon signal to calibrate the photons to a desired bell state, such as an original bell state of the respective photons, and a second fiber-based polarization retarder (412d) for adjusting the polarization state of the photon signal from the desired bell state according to an angle defined by the measuring procedure, wherein the controller (415b, 416, 417, 418, 419) is configured to perform a calibration procedure to determine one or more calibration parameters suitable for controlling the one or more first fiber-based polarization retarders such, that the one or more first fiber-based polarization retarders adjust the polarization state of the photon signal to the desired bell state.

11. The measuring apparatus (410a, 410b) according to claim 10, wherein the calibration procedure comprises varying a tilting angle of the one or more first fiber-based polarization retarders according to a gradient descent algorithm to determine a tilting angle or combination of tilting angles that adjust a polarization state of the photon signal such, that the resulting linear polarization is substantially orthogonal to a polarization of the polarization filter, as evidenced by a reduction of photons arriving at the detector.

12. The measuring apparatus (410a, 410b) according to one of the claims 6 to 11, wherein the controller (415b, 416, 417, 418, 419) is configured to obtain second information related to a photon count measured by a second detector (414) of a second measuring apparatus (410a, 410b) from the second measuring apparatus, and to determine the degree of quantum entanglement of the photons of the photon signal based on the information related to the photon count measured by the detector and based on the second information related to the photon count measured by the second detector,
    and/or wherein the controller (415b, 416, 417, 418, 419) is configured to provide the information related to the photon count measured by the detector to a second measuring apparatus or to a remote evaluation device.

13. A quantum node comprising the measuring apparatus according to one of the claims 1 to 12 and a quantum memory, wherein a controller of the quantum node is configured to determine a time delay of a photon signal comprising entangled photons arriving at the quantum node relative to one or more corresponding photon signals arriving at one or more other quantum nodes using the measuring apparatus, and to control the quantum memory based on the time delay.

**14.** A measuring system comprising a first measuring apparatus (410a) according to one of the claims 1 to 12 for measuring a first photon signal and a second measuring apparatus (410b) according to one of the claims 1 to 12 for measuring a second photon signal, wherein a controller (415b, 416, 417, 418, 419, 430) of the measuring system is configured to determine a degree of entanglement of photons of the first and second photon signal using the first and second measuring apparatus.

**15.** A method for determining a degree of quantum entanglement of photons of a photon signal, the method comprising:

providing (1120), by an entangled photon source, a first and a second photon signal comprising entangled photons to a first and second measuring apparatus;

adjusting (1130, 1140), by at least one fiber-based polarization retarder of the respective measuring apparatus, a polarization state of the first and second photon signal according to a measuring procedure comprising a plurality of stages, wherein the measuring procedure defines a plurality of combinations of polarization adjustments to be performed by the first and second measuring apparatus during the plurality of stages, and wherein the polarization state is adjusted by the respective at least one fiber-based polarization retarder using stress-induced birefringence,

filtering (1150), by a polarization filter of the respective measuring apparatus, the respective photon signal,

detecting (1160), by a detector of the respective measuring apparatus, photons of the respective photon signal after the polarization state of the photon signal is adjusted by the respective at least one fiber-based polarization retarder and the photon signal is filtered by the respective polarization filter,

determining (1170) first and second information related to a photon count measured by the respective detector during the respective stages of the measuring procedure, and

determining (1180) a degree of entanglement of the photons of the first and second photon signal based on a correlation or coincidence of detected photons indicated by the first and second information related to the photon count measured by the detectors of the first and second measurement device.

**Amended claims in accordance with Rule 137(2) EPC.**

**1.** Measuring apparatus (410a, 410b) for determining a degree of quantum entanglement of photons of a photon signal, the measuring apparatus comprising:

one or more first fiber-based polarization retarders (412a, 412b, 412c) for adjusting the polarization state of the photon signal to calibrate the photons to a desired bell state and a second fiber-based polarization retarder (412d) for adjusting the polarization state of the photon signal from the desired bell state according to an angle defined by a measuring procedure for determining the degree of quantum entanglement of the photons,

wherein the fiber-based polarization retarders are configured to adjust a polarization state of a photon signal being transmitted through a fiber using stress-induced birefringence;

a polarization filter (413) for filtering the photon signal transmitted through the fiber;

a detector (414) for detecting photons of the photon signal after the photon polarization state of the photon signal is adjusted by the at least one fiber-based polarization retarder and the photon signal is filtered by the polarization filter; and

a controller (415b, 416, 417, 418, 419) configured to control the at least one fiber-based polarization retarder to adjust the polarization state of the photon signal according to a measuring procedure comprising a plurality of stages, wherein the polarization state of the photon signals is adjusted by at least two different angles over a course of the measuring procedure, and to determine information related to a photon count measured by the detector (414) during the respective stages of the measuring procedure,

wherein the controller (415b, 416, 417, 418, 419) is configured to obtain second information related to a photon count measured by a second detector (414) of a second measuring apparatus (410a, 410b) from the second measuring apparatus, and to determine the degree of quantum entanglement of the photons of the photon signal based on the information related to the photon count measured by the detector and based on the second information related to the photon count measured by the second detector, and/or wherein the controller (415b, 416, 417, 418, 419) is configured to provide the information related to the photon count measured by the detector to a second measuring apparatus or to a remote evaluation device.

2. The measuring apparatus (410a, 410b) according to claim 1, wherein the one or more first fiber-based polarization retarders comprise at least one fiber-based polarization retarder (412b) for affecting a half wavelength phase shift and at least one fiber-based polarization retarder (412a, 412c) for affecting a quarter wavelength phase shift.

3. The measuring apparatus (410a, 410b) according to one of the claims 1 or 2, wherein the second fiber-based polarization retarder (412d) corresponds to a single fiber-based polarization retarder for affecting a half wavelength phase shift.

4. The measuring apparatus (410a, 410b) according to one of the claims 1 to 3, wherein the one or more first fiber-based polarization retarders (412a, 412b, 412c) are configured to reconstruct an original Bell state of the photon signal that is possibly disturbed during the fiber transmission.

5. The measuring apparatus (410a, 410b) according to one of the claims 1 to 4, wherein the measuring procedure is a measuring procedure for two or more measuring apparatuses (410a, 410b), wherein the measuring procedure defines a plurality of combinations of polarization adjustments to be performed by the two or more measuring apparatuses during the plurality of stages, with a separate combination of polarization adjustments being performed at each stage of the plurality of stages.

6. The measuring apparatus (410a, 410b) according to claim 5, wherein the measuring procedure defines at least sixteen combinations of polarization adjustments to be performed during at least sixteen stages.

7. The measuring apparatus (410a, 410b) according to one of the claims 1 to 6, wherein the measuring apparatus (410a, 410b) comprises at least one motor (415a) for tilting the at least one fiber-based polarization retarder, wherein the controller (415b, 416, 417, 418, 419) is configured to control the at least one motor to control the at least one fiber-based polarization retarder to adjust the polarization state of the photon signal.

8. The measuring apparatus (410a, 410b) according to one of the claims 1 to 7, wherein the measuring apparatus (410a, 410b) comprises one or more first fiber-based polarization retarders (412a, 412b, 412c) for adjusting the polarization state of the photon signal to calibrate the photons to a desired bell state, such as an original bell state of the respective photons, and a second fiber-based polarization retarder (412d) for adjusting the polarization state of the photon signal from the desired bell state according to an angle defined by the measuring procedure, wherein the controller (415b, 416, 417, 418, 419) is configured to perform a calibration procedure to determine one or more calibration parameters suitable for controlling the one or more first fiber-based polarization retarders such, that the one or more first fiber-based polarization retarders adjust the polarization state of the photon signal to the desired bell state.

9. The measuring apparatus (410a, 410b) according to claim 8, wherein the calibration procedure comprises varying a tilting angle of the one or more first fiber-based polarization retarders according to a gradient descent algorithm to determine a tilting angle or combination of tilting angles that adjust a polarization state of the photon signal such, that the resulting linear polarization is substantially orthogonal to a polarization of the polarization filter, as evidenced by a reduction of photons arriving at the detector.

10. A quantum node comprising the measuring apparatus according to one of the claims 1 to 9 and a quantum memory, wherein a controller of the quantum node is configured to determine a time delay of a photon signal comprising entangled photons arriving at the quantum node relative to one or more corresponding photon signals arriving at one or more other quantum nodes using the measuring apparatus, and to control the quantum memory based on the time delay.

11. A measuring system comprising a first measuring apparatus (410a) according to one of the claims 1 to 09 for measuring a first photon signal and a second measuring apparatus (410b) according to one of the claims 1 to 09 for measuring a second photon signal, wherein a controller (415b, 416, 417, 418, 419, 430) of the measuring system is configured to determine a degree of entanglement of photons of the first and second photon signal using the first and second measuring apparatus.

12. A method for determining a degree of quantum entanglement of photons of a photon signal, the method comprising:

   providing (1120), by an entangled photon source, a first and a second photon signal comprising entangled photons to a first and second measuring apparatus;
   adjusting (1130, 1140), by at least one fiber-based polarization retarder of the respective measuring apparatus, a polarization state of the first and second photon signal according to a measuring procedure comprising a plurality of stages, wherein the measuring procedure defines a plurality of combinations of polarization adjustments to be performed by the first and second measuring apparatus during the plurality of stages, and wherein the polarization state is adjusted by the respective at least one fiber-based polarization retarder using stress-induced birefringence,

filtering (1150), by a polarization filter of the respective measuring apparatus, the respective photon signal,

detecting (1160), by a detector of the respective measuring apparatus, photons of the respective photon signal after the polarization state of the photon signal is adjusted by the respective at least one fiber-based polarization retarder and the photon signal is filtered by the respective polarization filter,

determining (1170) first and second information related to a photon count measured by the respective detector during the respective stages of the measuring procedure, and

determining (1180) a degree of entanglement of the photons of the first and second photon signal based on a correlation or coincidence of detected photons indicated by the first and second information related to the photon count measured by the detectors of the first and second measurement device.

Polarizer $\alpha$

Detector $\alpha$

a

120a

130a

$$|\Psi^+\rangle = \frac{1}{\sqrt{2}}\left(|H_a V_b\rangle + |V_a H_b\rangle\right)$$

Entangled photon source

110

Time tagger

140

b

120b

130b

Polarizer $\beta$

Detector $\beta$

Fig. 1

EP 4 704 356 A1

Fig. 2

**Fig. 3**

Fig. 4

**Fig. 5**

EP 4 704 356 A1

**Fig. 6**

Fig. 7

Detector $\alpha \otimes$ Detector $\beta$

$W_{meas}$

$c$ [in $\tau\_meas$]

600 500 400 300 200 100 0

Time [ps]

0 500 1000 1500 2000 2500

Fig. 8

**Fig. 9**

a)

$\alpha$ [rad]

$\varepsilon_{HWP2-\alpha}$ [rad]

b)

$\beta$ [rad]

$\varepsilon_{HWP2-\beta}$ [rad]

Fig. 10

Performing a
calibration procedure — 1110

Providing a first and second
photon signal — 1120

Adjusting a polarization state
of a photon signal to a desired
bell state — 1130

Adjusting the polarization state
from the desired bell state
according to an angle defined
by a measuring procedure — 1140

Filtering the photon signal — 1150

Detecting photons — 1160

Determining information
related to a photon count — 1170

Determining a degree
of entanglement — 1180

**Fig. 11**

Fig. 12

Entangled photon pair
stored in two arbitrary QMs
(e.g., QM-$\alpha$ and QM-$\beta$)

1310

Measure photons
emitted by each QM
in the temporal
modes $\tau_\alpha$ and $\tau_\beta$

1320

Perform CHSH test
and calculate $S$

1330

$S \approx 2\sqrt{2}$ ?

Select new temporal
modes $\tau_\alpha$ and $\tau_\beta$

No

1350

Yes

Stop

1340

## Fig. 13

**EUROPEAN SEARCH REPORT**

Application Number

EP 24 19 6703

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 897 434 B1 (KUMAR PREM [US] ET AL) 24 May 2005 (2005-05-24) | 1 | INV. H04B10/70 |
| A | * column 1, line 20 - column 3, line 6 * <br> * column 12, lines 26-67 * <br> * figure 11 * | 2-15 | |
| A | US 8 385 548 B2 (NUCRYPT LLC [US]; KANTER GREGORY S [US]; WANG SHAWN [US]) 26 February 2013 (2013-02-26) <br> * column 1, line 21 - column 5, line 21 * <br> * figure 1 * | 1-15 | |
| A | WANG S X ET AL: "Robust Multiwavelength All-Fiber Source of Polarization-Entangled Photons With Built-In Analyzer Alignment Signal", IEEE JOURNAL OF SELECTED TOPICS IN QUANTUM ELECTRONICS, IEEE, USA, vol. 15, no. 6, 1 November 2009 (2009-11-01), pages 1733-1740, XP011344323, ISSN: 1077-260X, DOI: 10.1109/JSTQE.2009.2022278 <br> * abstract * <br> * Sections I, II.A and II.B * <br> * figure 2 * | 1-15 | TECHNICAL FIELDS SEARCHED (IPC) <br><br> H04B |
| A | CN 117 576 995 A (JIUZHANG JINAN QUANTUM TECH CO LTD) 20 February 2024 (2024-02-20) <br> * the whole document * | 1-15 | |

The present search report has been drawn up for all claims

| Place of search | Date of completion of the search | Examiner |
|---|---|---|
| Munich | 14 January 2025 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 6703

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2025

| Patent document cited in search report | | Publication date | Patent family member(s) | Publication date |
|---|---|---|---|---|
| US 6897434 | B1 | 24-05-2005 | NONE | |
| US 8385548 | B2 | 26-02-2013 | NONE | |
| CN 117576995 | A | 20-02-2024 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ALBERT EINSTEIN ; BORIS PODOLSKY ; NATHAN ROSEN**. Can quantum-mechanical description of physical reality be considered complete?. *Physical review*, 1935, vol. 47 (10), 777-780
- **JOHN STEWART BELL ; JOHN STEWART BELL**. Speakable and unspeakable in quantum mechanics: Collected papers on quantum philosophy. Cambridge university press, 2004
- **MARY A ROWE ; DAVID KIELPINSKI ; VOLKER MEYER ; CHARLES A SACKETT ; WAYNE M ITANO ; CHRISTOPHER MONROE ; DAVID J WINELAND**. Experimental violation of a bell's inequality with efficient detection. *Nature*, 2001, vol. 409 (6822), 791-794
- **PAUL G KWIAT ; KLAUS MATTLE ; HARALD WEINFURTER ; ANTON ZEILINGER ; ALEXANDER V SERGIENKO ; YANHUA SHIH**. New high-intensity source of polarization-entangled photon pairs. *Physical Review Letters*, 1995, vol. 75 (24), 4337

- **JG RARITY ; PR TAPSTER**. Experimental violation of bell's inequality based on phase and momentum. *Physical Review Letters*, 1990, vol. 64 (21), 2495
- **JOHN F CLAUSER ; MICHAEL A HORNE ; ABNER SHIMONY ; RICHARD A HOLT**. Proposed experiment to test local hidden-variable theories. *Physical review letters*, 1969, vol. 23 (15), 880
- **E. COLLETT**. Field Guide to Polarization. SPIE Press, 2005
- **R. ULRICH ; S.C. RASHLEIGH ; W. EICKHOFF**. Bending-induced birefringence in single-mode fibers. *Opt. Lett.*, 1980, vol. 5, 273-275
- **R. ULRICH ; A. SIMON**. Polarization optics of twisted single-mode fibers. *Appl. Opt.*, 1979, vol. 18, 2241-2251
- **CLAUSEN, C. ; USMANI, I. ; BUSSIÈRES, F. et al.** Quantum storage of photonic entanglement in a crystal. *Nature*, 2011, vol. 469, 508-511, https://doi.org/10.1038/nature09662